# EUROPEAN PATENT SPECIFICATION

(11) **EP 3 047 671 B1**
(45) Date of publication and mention of the grant of the patent: **20.01.2021**
(21) Application number: 14845419.2
(22) Date of filing: 12.09.2014
(51) Int. Cl.: H04W 8/00, H04W 4/00

(54) **EARLY TTT TERMINATION**
FRÜHER TTT-ABSCHLUSS
ARRÊT PRÉCOCE DE TTT

(30) Priority: 17.09.2013 US 201361879014 P
(43) Date of publication of application: 27.07.2016
(73) Proprietor: Apple Inc., Cupertino, CA 95014 (US)
(72) Inventor: YIU, Candy, Portland, Oregon 97201 (US)
(74) Representative: Lang, Johannes
(86) International application number: PCT/US2014/055517
(87) International publication number: WO 2015/041960

(56) References cited:
- WO-A1-2012/150880
- WO-A1-2013/028128
- WO-A1-2013/112716
- WO-A1-2013/115696
- US-A1- 2011 009 116
- US-A1- 2011 059 741
- US-A1- 2013 040 692

## Description

### TECHNICAL FIELD

Embodiments described herein generally relate to the field of wireless communications and, more particularly, to methods and apparatus for controlling signalling between a mobile device and base stations during handover in a wireless communication system.

### BACKGROUND OF THE INVENTION

It is becoming more important to be able to provide telecommunication services to fixed and mobile subscribers as efficient and inexpensively as possible. Further, the increased use of mobile applications has resulted in much focus on developing wireless systems capable of delivering large amounts of data at high speed.

One approach to meeting this requirement has been the use of heterogeneous networks that include a mixture of cells of different sizes, thereby allowing greater re-use of radio resources within the network. However, it is important to limit any negative impact on the user experience when for user equipment operating in a heterogeneous network environment.

US 2011/059741 A1 discloses a method to trigger a time to trigger for at least one of a hard or soft handover based on rates of increase or decrease in signal strength per unit of time associated with serving and target cells, where the rates are computed by linear regression.

WO 2013/112716 A1 discloses a method to adaptively select an A3offset-TTT pair for handover in a wireless network, where the TTT may be selected to be directly related to a serving cell reference signal received power.

### BRIEF DESCRIPTION OF THE DRAWING

Aspects, features and advantages of embodiments of the present invention will become apparent from the following description of the invention in reference to the appended drawings in which like numerals denote like elements and in which:
Fig. 1 is block diagram of an example wireless network according to various embodiments;
Fig. 2 is a graph illustrating Reference Signal Received Power values for a user equipment moving between cell areas;
Fig. 3 is a block diagram showing an exemplary method in a user equipment in accordance with various embodiments;
Fig. 4 illustrates performance of an exemplary embodiment compared to prior art methods;
Fig. 5 is a block diagram showing an example system in accordance with various embodiments; and
Fig. 6 is a block diagram showing an example wireless apparatus configured for communicating in a wireless network according to one or more of the inventive methods disclosed herein.

### DETAILED DESCRIPTION OF EMBODIMENTS

The invention is defined by the appended claims. Illustrative embodiments of the present disclosure include, but are not limited to, methods, systems, and apparatuses for controlling signaling relating to a handover between base stations in a wireless communication network.

Various aspects of the illustrative embodiments will be described using terms commonly employed by those skilled in the art to convey the substance of their work to others skilled in the art. However, it will be apparent to those skilled in the art that some alternate embodiments may be practiced using with portions of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order to not obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in one embodiment" is used repeatedly. The phrase generally does not refer to the same embodiment; however, it may. The terms "comprising," "having," and "including" are synonymous, unless the context dictates otherwise. The phrase "A/B" means "A or B". The phrase "A and/or B" means "(A), (B), or (A and B)". The phrase "at least one of A, B and C" means "(A), (B), (C), (A and B), (A and C), (B and C) or (A, B and C)". The phrase "(A) B" means "(B) or (A B)", that is, A is optional.

Although specific embodiments have been illustrated and described herein, it will be appreciated by those of ordinary skill in the art that a wide variety of alternate and/or equivalent implementations may be substituted for the specific embodiments shown and described, without departing from the scope of the embodiments of the present disclosure. This application is intended to cover any adaptations or variations of the embodiments discussed herein. Therefore, it is manifestly intended that the embodiments of the present disclosure be limited only by the claims and the equivalents thereof.

As used herein, the term "module" may refer to, be part of, or include an Application Specific Integrated Circuit (ASIC), an electronic circuit, a processor (shared, dedicated, or group) and/or memory (shared, dedicated, or group) that execute one or more software or firmware instructions and/or programs, a combinational logic circuit, and/or other suitable components that provide the described functionality.

The following inventive embodiments may be used in a variety of applications including transmitters and receivers of a radio system, although the present invention is not limited in this respect. Radio systems specifically included within the scope of the present invention include, but are not limited to, network interface cards (NICs), network adaptors, fixed or mobile client devices, relays, base stations, femtocells, gateways, bridges, hubs, routers, access points, or other network devices. Further, the radio systems within the scope of the invention may be implemented in cellular radiotelephone systems, satellite systems, two-way radio systems as well as computing devices including such radio systems including personal computers (PCs), tablets and related peripherals, personal digital assistants (PDAs), personal computing accessories, hand-held communication devices and all systems which may be related in nature and to which the principles of the inventive embodiments could be suitably applied.

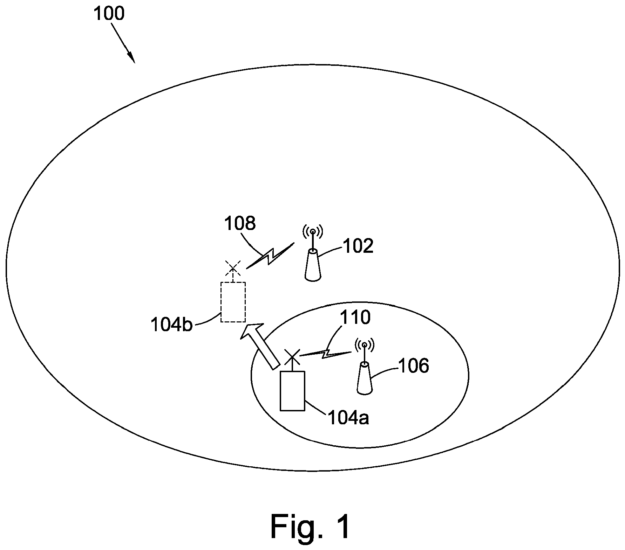

Figure 1 schematically illustrates a wireless communication network 100 in accordance with various embodiments. Wireless communication network 100 (hereinafter "network 100") may be an access network of a 3rd Generation Partnership Project (3GPP) long-term evolution (LTE) or long-term evolution-advanced (LTE-A) network such as an evolved universal mobile telecommunication system (UMTS) terrestrial radio access network (E-UTRAN).

The network 100 may include a base station, e.g., evolved node base station (eNB) 102, configured to wirelessly communicate with one or more mobile device(s) or terminal(s), e.g., user equipment (UE) 104. In various embodiments, the eNB 102 may be a fixed station (e.g., a fixed node) or a mobile station/node.

Wireless communication network 100 further includes an evolved node second base station (eNB) 106 covering a cell area that overlaps with that of the first eNB 102, configured to wirelessly communicate with one or more mobile device(s) or terminal(s). Thus, wireless communication network 100 can be considered an example of a heterogeneous network that includes cells of different sizes, each of which may re-use radio resources within the network as appropriate.

In various embodiments, the UE 104 and/or the eNB 102, 106 may include a plurality of antennas to implement a multiple-input-multiple-output (MIMO) transmission system, which may operate in a variety of MIMO modes, including single-user MIMO (SU-MIMO), multi-user MIMO (MU-MIMO), close loop MIMO, open loop MIMO or variations of smart antenna processing.

During operation of the wireless network 100, the UE 104 may move through the area covered by the network. When the UE 104a is within the cell area associated with second eNB 106, the US 104 will transmit signals 110 to the network via that eNB 106. Subsequently, the UE 104 may move to a different position 104b outside of the cell area associated with the second eNB 106, but within the area covered by the first eNB 102. As the UE 104 moves from the first position 104a to the second position 104b, a handover procedure will be initiated such that the UE's connection to the wireless network 100 is via signals 108 transmitted to the first eNB 104.

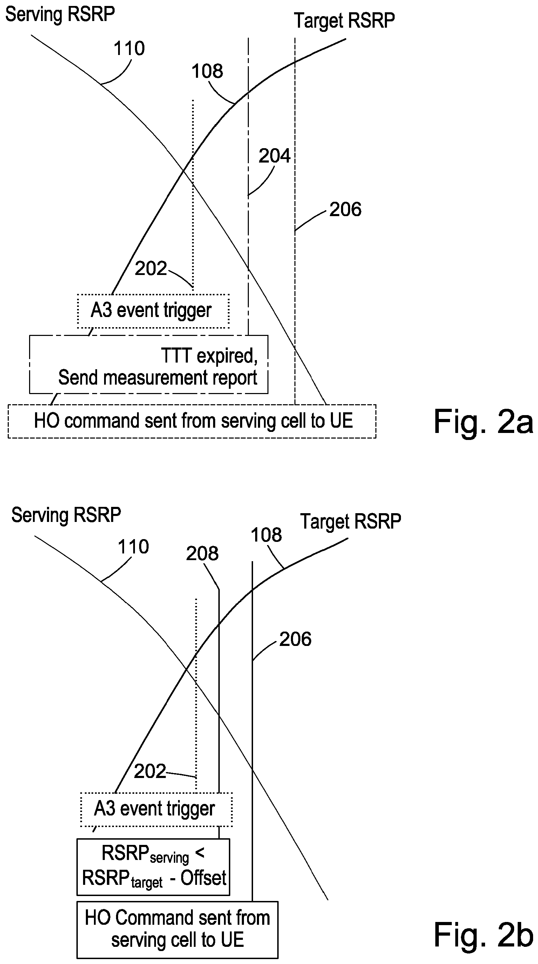

Initiation of the handover procedure is typically controlled based on monitoring of signal strength received at the mobile station from the serving eNB and neigbouring eNBs. In particular, a reference signal received power (RSRP), or reference signal received quality (RSRQ) metric (depending network configuration), or potentially signal to interference noise ratio (SINR) is determined for a reference signal received from each eNB. As the distance between a UE and a serving eNB, such as second eNB 106, increases, the RSRP decreases. Figure 2a illustrates a reduction in the RSRP measured on signal 110 from the second eNB 106 as the UE moves from the first position 104a to the second position 104b in the wireless network 100 of Figure 1.

Conversely, as the UE moves closer to the first eNB 102, the RSRP associated with signal 108 increases. At a certain point, the RSRP associated with the first eNB 102 will exceed the RSRP for the second eNB 106 and a trigger condition for handover may be reached.

In current wireless communication networks, such as Rel 11 LTE networks, when a UE has detected that a neighboring cell's signal is stronger than its serving cell (known as event A3 in the LTE standards), the UE will wait until a time-to-trigger (TTT) timer has expired before initiating the handover procedure. The A3 condition 202 must be maintained though out the TTT period before the handover procedure can be initiated. The TTT period may be set according to information provided by the network.

In particular this process is defined in the 3GPP standards as follows:

### Event A3 (Neighbour becomes offset better than PCell) [TS36.331]

The UE shall:
1 >consider the entering condition for this event to be satisfied when condition A3-1, as specified below, is fulfilled;
1>consider the leaving condition for this event to be satisfied when condition A3-2, as specified below, is fulfilled;
NOTE The cell(s) that triggers the event is on the frequency indicated in the associated *measObject* which may be different from the (primary) frequency used by the PCell.
Inequality A3-1 (Entering condition)
*Mn*+*Ofn*+*Ocn-Hys>Mp*+*Ofp*+*Ocp*+*Off*
Inequality A3-2 (Leaving condition)
*Mn+Ofn+Ocn+Hys<Mp+Ofp+Ocp+Off*

The variables in the formula are defined as follows:
***Mn*** is the measurement result of the neighbouring cell, not taking into account any offsets.
***Ofn*** is the frequency specific offset of the frequency of the neighbour cell (i.e. *offsetFreq* as defined within *measObjectEUTRA* corresponding to the frequency of the neighbour cell).
***Ocn*** is the cell specific offset of the neighbour cell (i.e. *cellIndividualOffiet* as defined within *measObjectEUTRA* corresponding to the frequency of the neighbour cell), and set to zero if not configured for the neighbour cell.
***Mp*** is the measurement result of the PCell, not taking into account any offsets.
***Ofp*** is the frequency specific offset of the primary frequency (i.e. *offsetFreq* as defined within *measObjectEUTRA* corresponding to the primary frequency).
***Ocp*** is the cell specific offset of the PCell (i.e. *cellIndividualOffset* as defined within *measObjectEUTRA* corresponding to the primary frequency), and is set to zero if not configured for the PCell.
***Hys*** is the hysteresis parameter for this event (i.e. *hysteresis* as defined within *reportConfigEUTRA* for this event).
***Off*** is the offset parameter for this event (i.e. *a3-Offset* as defined within *reportConfigEUTRA* for this event).
***Mn**, **Mp*** are expressed in dBm in case of RSRP, or in dB in case of RSRQ.
***Ofn**, **Ocn**, **Ofp**, **Ocp, Hys, Off*** are expressed in dB.

If the A3 condition 202 remains satisfied until the expiry of the TTT timer, a measurement report 204 is sent to the serving eNB 106, including information on the received signal strengths. The serving eNB 106 will then transmit a handover command to the UE to perform a handover to the neighboring cell having a higher RSRP.

However, it has been found that this process does not always perform well in heterogeneous network environments. As the UE 104 moves from the serving eNB 106 to the target eNB 102, the RSRP of the serving eNB 106 can drop significantly. This is particularly relevant to eNBs associated with small cell areas, for example pico cells, which have relatively low transmit signal power. If the received signal power from the serving eNB decreases to far before the handover command 208 can be transmitted by the serving eNB, the handover command will fail to be received by the UE 104 due to a low signal to interference and noise ratio (SINR) at the UE from the serving eNB. As a result the UE declares a radio link failure and cannot complete the handover successfully.

According to some embodiments, the UE 104 monitors the RSRP associated with the serving and target cells once the A3 event trigger has been reached and if it is determined that the RSRP for the target eNB 102 is greater than the RSRP for the serving eNB 106 by a threshold amount, the TTT timer is terminated and the measurement report is transmitted to the serving eNB 106. The threshold value may be configured by the network, for example during RRC reconfiguration setup, as an offsetThreshold value.

In this way, if the UE detects that the RSRP for the serving cell is significantly lower, i.e. by the threshold value, than the RSRP of the target cell during the period of the TTT timer, the UE immediately transmits the measurement report to the serving eNB 106 without waiting for the TTT timer to expire.

Figure 2b illustrates the operation of the UE 104 according to some embodiments. As the serving RSRP 110 continues to decrease after the A3 event trigger 202 has occurred, it is determined at the UE 104 that RSRPserving < RSRPtarget - OffsetThreshold 208. At this point the TTT timer is immediately terminated and the measurement report is transmitted to the serving eNB 106. The handover command 206 can then be transmitted by the serving eNB 106 before the RSRP associated with the serving eNB 106 has decreased to the point where the UE 104 is unable to reliably receive the handover command.

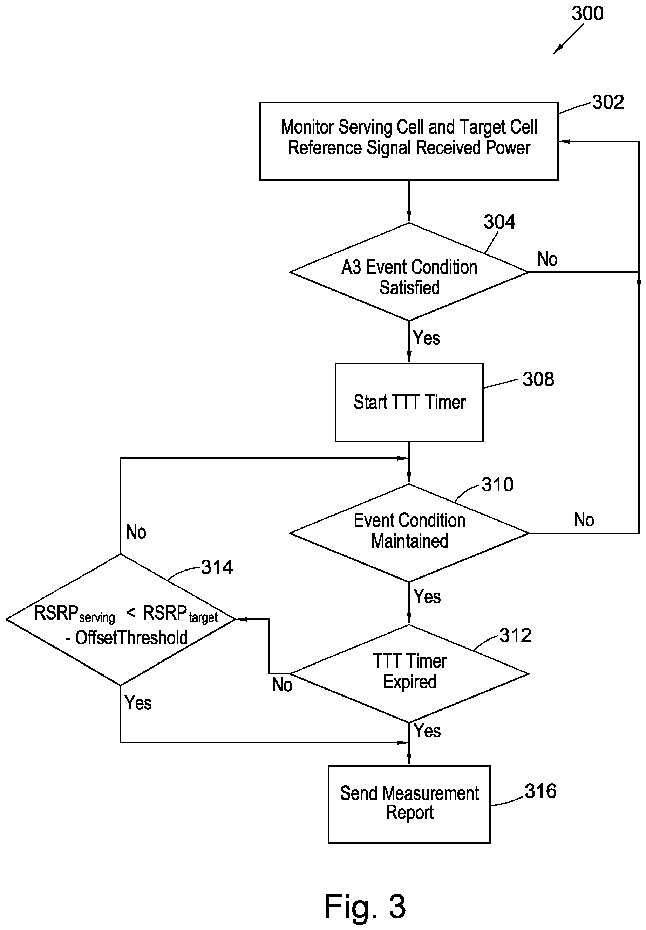

Figure 3 illustrates a method 300 performed at the UE 104 according to some embodiments. During normal operation, the UE 104 continually monitors 302 the RSRP associated with the serving eNB 106, as well as other neighboring eNBs, such as eNB 102, and determines 304 whether the A3 Event condition has been satisfied. If the A3 event condition has been satisfied with respect to a certain target eNB, the TTT timer is initiated 308 and the UE 104 continues to monitor the RSRP values for the serving and target eNBs. A determination 310 is then made as to whether the A3 condition has been maintained and If not the UE returns to normal operation 302. If the A3 condition is maintained, it is determined 312 whether the TTT timer has expired. Upon expiry of the TTT timer, the UE sends the measurement report 316 to the serving eNB 106.

If the TTT timer has not expired, a further determination 314 is made as to whether the RSRPserving < RSRPtarget - OffsetThreshold. If not the UE continues to monitor whether the A3 event condition has been maintained 310. However, if the UE determines that the RSRPserving is less than RSRPtarget - OffsetThreshold, then the measurement report is immediately transmitted 316.

By terminating the TTT timer and transmitting the measurement report to the serving eNB 106 early, it is more likely that the handover command transmitted by the eNB in response will be successfully received by the UE 104. Thereby reducing the frequency of failed handovers due to the failure of the UE to receive the handover command.

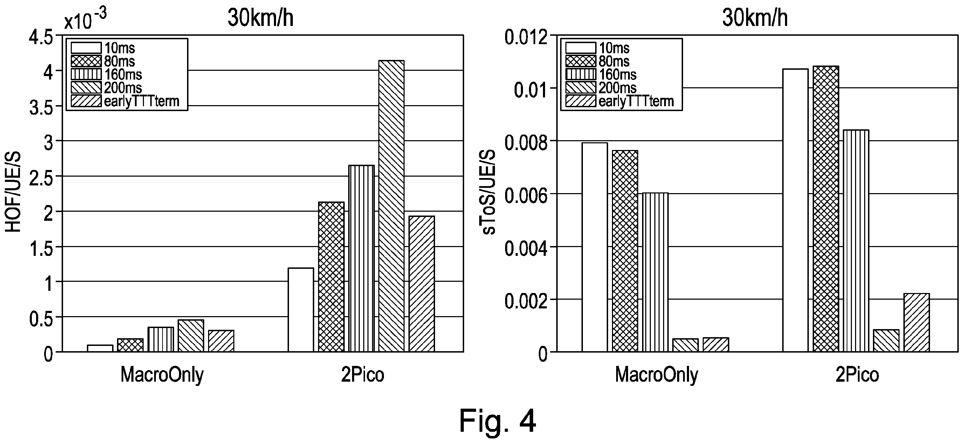

Figure 4 illustrates the results of simulations comparing the prior art method illustrated in Figure 2a with the method described in conjunction with Figure 2b. In particular , Figure 4 shows handover failure (HOF) rate and short time of stay (SToS) performance for embodiments compared to a UE using a fixed TTT value. As can be seen from Figure 4, TTT = 10ms provides the lower bound for HOF, however this is at the expense of a high SToS. On the contrary, a TTT = 200ms provides the lower bound for SToS, but with a very high HOF. However, for a UE implementing early termination of the TTT as described above, the HOF and SToS results can be seen to be similar to the lower bound values of the fixed TTT examples.

To provide for implementation of the described method in the LTE standards, a number of changes are required in TS 36.331 as outlined below:

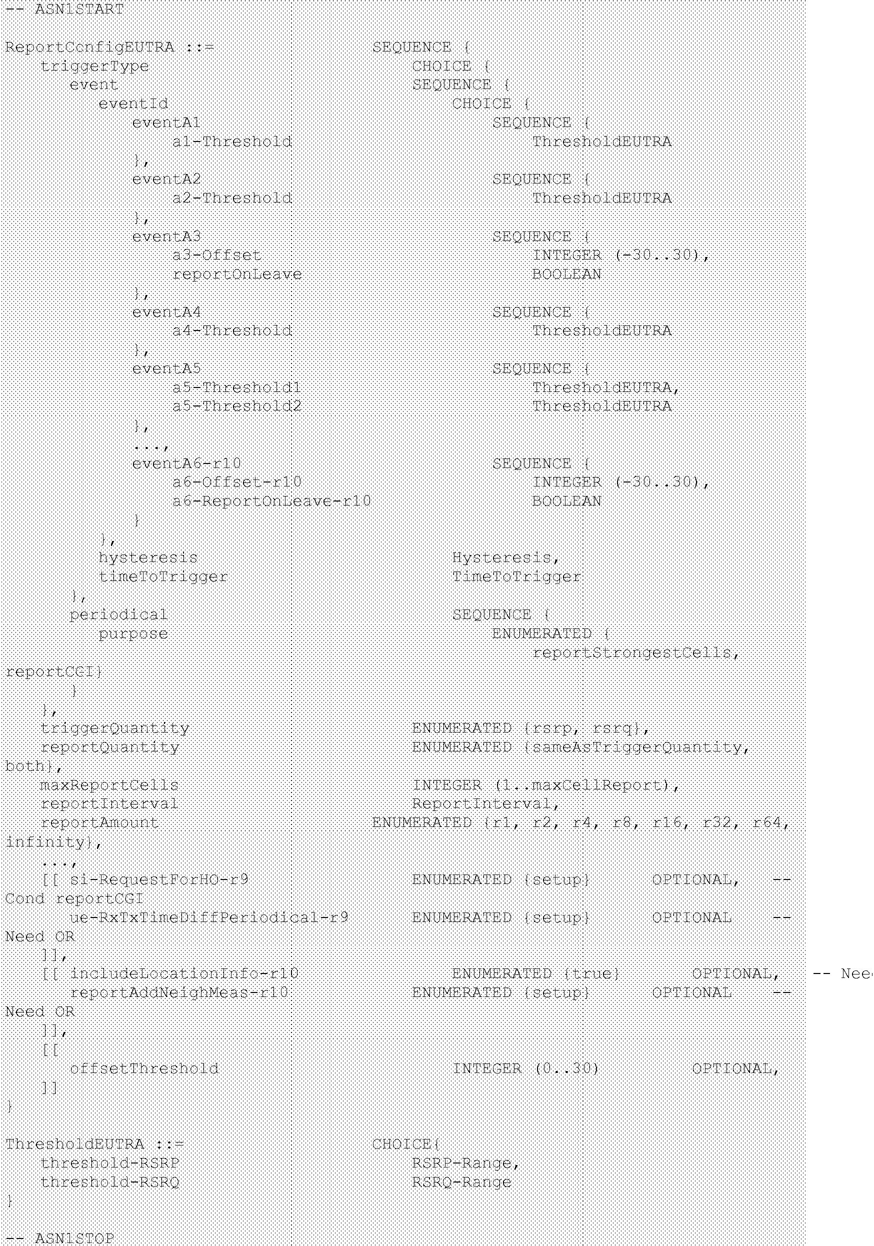

### ReportConfigEUTRA field descriptions

### a3-Offset/a6-Offset

Offset value to be used in EUTRA measurement report triggering condition for event a3/a6. The actual value is IE value*0.5dB.

### aN-ThresholdM

Threshold to be used in EUTRA measurement report triggering condition for event number aN. If multiple thresholds are defined for event number aN, the thresholds are differentiated by M.

### eventld

Choice of E-UTRA event triggered reporting criteria.

### maxReportCells

Max number of cells, excluding the serving cell, to include in the measurement report.

### reportAmount

Number of measurement reports applicable for triggerType event as well as for triggerType periodical. In case purpose is set to reportCGI only value 1 applies.

### reportOnLeave/a6-ReportOnLeave

Indicates whether or not the UE shall initiate the measurement reporting procedure when the leaving condition is met for a cell in cellsTriggeredList, asspecified in 5.5.4.1.

### reportQuantity

The quantities to be included in the measurement report. The value both means that both the rsrp and rsrq quantities are to be included in the measurement report.

### si-RequestForHO

The field applies to the reportCGI functionality, and when the field is included, the UE is allowed to use autonomous gaps in acquiring system information from the neighbour cell, applies a different value for T321, and includes different fields in the measurement report.

### ThresholdEUTRA

For RSRP: RSRP based threshold for event evaluation.The actual value is IEvalue-140dBm6. For RSRQ: RSRQ based threshold for event evaluation. The actual value is (IEvalue-40)/2dB.

### Offset-threshold

This is an offset threshold to evaluate when Mn-Mp>offsetThreshold ,the UE shall terminate TTT and send the measurement report immediately.

### timeToTrigger

Time during which specific criteria for the event needs to be met in order to trigger a measurement report.

### triggerQuantity

The quantities used to evaluate the triggering condition for the event. The values rsrp and rsrq correspond to Reference Signal Received Power (RSRP) and Reference Signal Received Quality (RSRQ), see TS36.214[48].

### ue-RxTxTimeDiffPeriodical

If this field is present, the UE shall perform UERx-Tx time difference measurement reporting and ignore the fields triggerQuantity, reportQuantity and maxReportCells. If the field is present, the only applicable values for the corresponding triggerType and purpose are periodical and report Strongest Cells respectively.

According to some embodiments, the eNB may transmit the Offset-threshold value to the user equipment in a Offset-threshold information element. For example the network may use a RRC message such as the ConfigReportEUTRAN message shown above, or some other RRC message, to transmit the Offset-Threshold value to the User Equipment.

While embodiments of the present invention are described with reference to an LTE network, some embodiments may be used with other types of wireless access networks. Furthermore, while the embodiments described above rely on the reference signal received power (RSRP), the disclosed methods can be similarly applied using the reference signal received quality or signal to interference noise ratio.

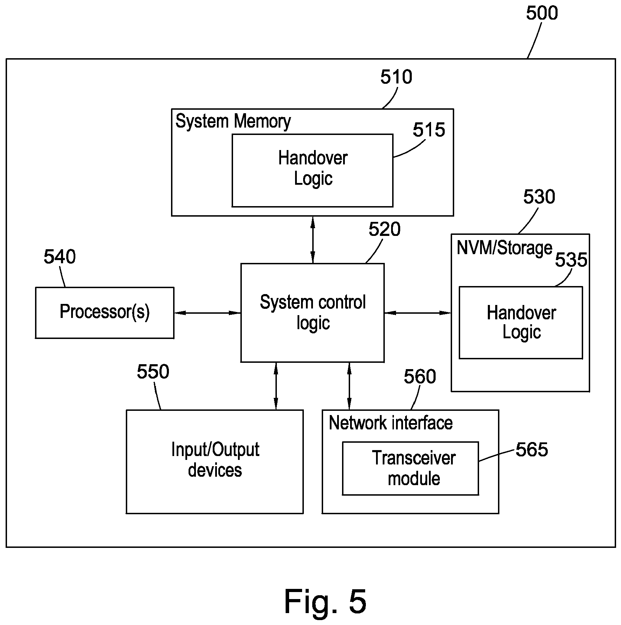

The eNBs 104 and UEs 108 described herein may be implemented into a system using any suitable hardware and/or software to configure as desired. Figure 5 illustrates, for one embodiment, an example system 500 comprising one or more processor(s) 540, system control logic 520 coupled with at least one of the processor(s) 540, system memory 510 coupled with system control logic 520, non-volatile memory (NVM)/storage 530 coupled with system control logic 520, and a network interface 560 coupled with system control logic 520. The system control logic 520 may also be coupled to Input/Output devices 550.

Processor(s) 540 may include one or more single-core or multi-core processors. Processor(s) 540 may include any combination of general-purpose processors and dedicated processors (e.g., graphics processors, application processors, baseband processors, etc.). Processors 540 may be operable to carry out the above described methods, using suitable instructions or programs (i.e. operate via use of processor, or other logic, instructions). The instructions may be stored in system memory 510, as handover logic system memory portion 515, or additionally or alternatively may be stored in (NVM)/storage 530, as handover logic NVM instruction portion 535.

Processors(s) 540 may be configured to execute the embodiments of Figures 2-6 in accordance with various embodiments. In an embodiment in which the system 500 implements an eNB 104, processor(s) 540 may be configured to transmit to the UE 108 an Offset-Threshold value as described above.

System control logic 520 for one embodiment may include any suitable interface controllers to provide for any suitable interface to at least one of the processor(s) 540 and/or to any suitable device or component in communication with system control logic 520.

System control logic 520 for one embodiment may include one or more memory controller(s) (not shown) to provide an interface to system memory 510. System memory 510 may be used to load and store data and/or instructions, for example, for system 500. System memory 510 for one embodiment may include any suitable volatile memory, such as suitable dynamic random access memory (DRAM), for example.

NVM/storage 530 may include one or more tangible, non-transitory computer-readable media used to store data and/or instructions, for example. NVM/storage 530 may include any suitable non-volatile memory, such as flash memory, for example, and/or may include any suitable non-volatile storage device(s), such as one or more hard disk drive(s) (HDD(s)), one or more compact disk (CD) drive(s), and/or one or more digital versatile disk (DVD) drive(s), for example.

The NVM/storage 530 may include a storage resource physically part of a device on which the system 500 is installed or it may be accessible by, but not necessarily a part of, the device. For example, the NVM/storage 530 may be accessed over a network via the network interface 560.

System memory 510 and NVM/storage 530 may respectively include, in particular, temporal and persistent copies of, for example, the handover logic instructions portions 515 and 535, respectively. Instructions portions 515 and 535 may include instructions that when executed by at least one of the processor(s) 540 result in the system 500 implementing method 300 or the method(s) of any other embodiment, as described herein. In some embodiments, instruction portions 515 and 535, or hardware, firmware, and/or software components thereof, may additionally/alternatively be located in the system control logic 520, the network interface 560, and/or the processor(s) 540.

Network interface 560 may have a transceiver module 565 to provide a radio interface for system 500 to communicate over one or more network(s) (e.g. wireless communication network) and/or with any other suitable device. In various embodiments, the transceiver 565 may be integrated with other components of system 500. For example, the transceiver 565 may include a processor of the processor(s) 540, memory of the system memory 510, and NVM/Storage of NVM/Storage 530. Network interface 560 may include any suitable hardware and/or firmware. Network interface 560 may be operatively coupled to a plurality of antennas to provide a multiple input, multiple output radio interface. Network interface 560 for one embodiment may include, for example, a network adapter, a wireless network adapter, a telephone modem, and/or a wireless modem.

For one embodiment, at least one of the processor(s) 540 may be packaged together with logic for one or more controller(s) of system control logic 520. For one embodiment, at least one of the processor(s) 540 may be packaged together with logic for one or more controllers of system control logic 520 to form a System in Package (SiP). For one embodiment, at least one of the processor(s) 540 may be integrated on the same die with logic for one or more controller(s) of system control logic 520. For one embodiment, at least one of the processor(s) 540 may be integrated on the same die with logic for one or more controller(s) of system control logic 520 to form a System on Chip (SoC).

In various embodiments, the I/O devices 550 may include user interfaces designed to enable user interaction with the system 500, peripheral component interfaces designed to enable peripheral component interaction with the system 500, and/or sensors designed to determine environmental conditions and/or location information related to the system 500.

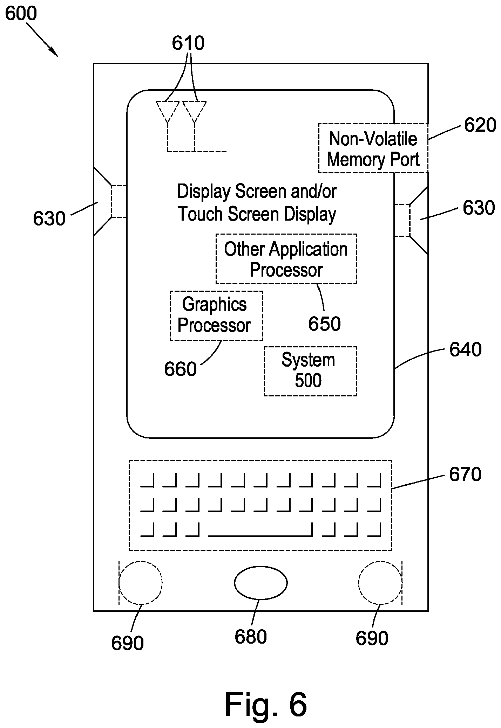

Figure 6 shows an embodiment in which the system 500 implements a UE 108 in the specific form of a mobile device 600.

In various embodiments, user interfaces could include, but are not limited to, a display 640 (e.g., a liquid crystal display, a touch screen display, etc.), a speaker 630, a microphone 690, one or more cameras 680 (e.g., a still camera and/or a video camera), a flashlight (e.g., a light emitting diode flash), and a keyboard 670.

In various embodiments, the peripheral component interfaces may include, but are not limited to, a non-volatile memory port, an audio jack, and a power supply interface.

In various embodiments, the sensors may include, but are not limited to, a gyro sensor, an accelerometer, a proximity sensor, an ambient light sensor, and a positioning unit. The positioning unit may also be part of, or interact with, the network interface 560 to communicate with components of a positioning network, e.g., a global positioning system (GPS) satellite.

In various embodiments, the system 500 may be a mobile computing device such as, but not limited to, a laptop computing device, a tablet computing device, a netbook, a mobile phone, etc. In various embodiments, system 700 may have more or less components, and/or different architectures.

In embodiments, the implemented wireless network may be a 3rd Generation Partnership Project's long term evolution (LTE) advanced wireless communication standard, which may include, but is not limited to releases 8, 9, 10, 11 and 12, or later, of the 3GPP's LTE-A standards.

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims and the equivalents thereof.

In various embodiments, a user equipment is provided for use in a wireless communication system, the user equipment comprising a communication module configured to obtain a first signal measurement value, associated with a reference signal transmitted by a serving eNB and a second signal measurement value associated with a reference signal transmitted by a further eNB and control logic configured to initiate a time to trigger, TTT, timer based on a determination that the first signal measurement value is less than the second signal measurement value, and terminate the TTT timer based on a determination that the first signal measurement value is less than the second signal measurement value by more than a threshold value.

In various embodiments, the control logic is further configured to cause the control logic to transmit a measurement report to the serving eNB upon termination of the TTT timer.

In various embodiments, the communication module is further configured to receive information from the serving eNB comprising the threshold value.

In various embodiments, the communication module is further configured to receive the threshold value from the serving eNB in a ReportConfigEUTRA information element.

In various embodiments, the communication module is further configured to receive a handover command from the serving eNB in response to the measurement report.

In various embodiments, the first signal measurement value and the second signal measurement value comprise reference signal received power, RSRP, values.

In various embodiments, the first signal measurement value and the second signal measurement value comprise reference signal received quality, RSRQ, values.

In various embodiments, the user equipment is for use in a network implementing the 3rd Generation Partnership Project long term evolution, LTE, advanced wireless communication standard.

In various embodiments, the wireless communication system comprises a heterogeneous network environment.

In various embodiments, there is provided a user equipment for use in a wireless communication system, the user equipment comprising means for obtaining a first signal measurement value, associated with a reference signal transmitted by a serving eNB and a second signal measurement value, associated with a reference signal transmitted by a further eNB means for initiating a time to trigger, TTT, timer based on a determination that the first signal measurement value is less than the second signal measurement value and means for terminating the TTT timer based on a determination that the first signal measurement value is less than the second signal measurement value by more than a threshold value.

In various embodiments, there is provided a method of controlling handover of a user equipment in a wireless communication system, the method comprising monitoring a first signal measurement value, associated with a reference signal transmitted by a serving eNB and an second signal measurement value, associated with a reference signal transmitted by a further eNB, initiating a time to trigger, TTT, timer based on a determination that the first signal measurement value is less than the second signal measurement value, and responsive to a determination that the first signal measurement value is less than the second signal measurement value by more than a threshold value, terminating the TTT timer.

In various embodiments, the method further comprises transmitting a measurement report to the serving eNB upon termination of the TTT timer.

In various embodiments, the first signal measurement value and the second signal measurement value comprise reference signal received power values.

In various embodiments, the first signal measurement value and the second signal measurement value comprise reference signal received quality

In various embodiments, the method further comprises receiving information comprising the threshold value from the serving eNB.

In various embodiments, receiving information comprising the threshold value from the serving eNB comprises receiving an ReportConfigEUTRA information element from the eNB.

In various embodiments, there is provided a user equipment comprising a processor and a non-transient memory comprising computer program instructions that when executed on the processor cause the user equipment to perform a method as described above.

In various embodiments, there is provided a user equipment as described above further comprising one or more of: a screen, a speaker, a touchscreen, a keyboard, an antenna array including a plurality of antennas, a graphics processor, or an application processor.

In various embodiments, there is provided an eNB for use in a wireless communication system, the eNB comprising a communication module configured to transmit a wireless signal to at least one user equipment, and control logic coupled to the communication module and configured to obtain an offset value to be used by a user equipment in determining whether to terminate a time to trigger, TTT, timer early and cause the communication module to transmit information to at least one user equipment, the information comprising the threshold value.

In various embodiments, the communication module is further configured to transmit a reference signal to the at least one user equipment.

In various embodiments, the communication module is further configured to receive a measurement report from the at least one user equipment and to transmit a handover command to the user equipment in response to the measurement report.

In various embodiments, the information comprising the threshold value comprises a ReportConfigEUTRA information element.

In various embodiments, there is provided a method performed in eNB in a wireless communication system, the method comprising obtaining an offset value to be used by a user equipment in determining whether to terminate a time to trigger, TTT, timer early, and transmitting information to at least one user equipment, the information comprising the threshold value.

In various embodiments, the information comprising the threshold value comprises a ReportConfigEUTRA information element.

In various embodiments, there is provided a non-transient computer readable medium comprising computer program instructions that when executed on a processor cause a method as described above to be performed.

## Claims

1. A user equipment for use in a wireless communication system, the user equipment comprising:
a communication module configured to obtain a first signal measurement value, associated with a reference signal transmitted by a serving eNB and a second signal measurement value associated with a reference signal transmitted by a further eNB; and
control logic configured to:
initiate (308) a time to trigger, TTT, timer based on a determination (304) that the first signal measurement value is less than the second signal measurement value;
following expiration of the TTT timer upon the first signal measurement value is less than the second signal measurement value by more than a threshold value; and
cause the control logic to transmit a measurement report to the serving eNB upon termination of the TTT timer, and
wherein the communication module is further configured to receive a handover command from the serving eNB in response to the measurement report.

2. The user equipment of claim 1, wherein the communication module is further configured to receive information from the serving eNB comprising the threshold value; optionally
wherein the communication module is further configured to receive the threshold value from the serving eNB in a ReportConfigEUTRA information element.

3. The user equipment of claim 1, wherein the first signal measurement value and the second signal measurement value comprise one of:
reference signal received power, RSRP, values;
reference signal received quality, RSRQ, values; and
signal to interference noise ratio, SINR, values.

4. The user equipment of claim 1, wherein the user equipment is for use in a network implementing the 3rd Generation Partnership Project long term evolution, LTE, advanced wireless communication standard; or
wherein the wireless communication system comprises a heterogeneous network environment.

5. A method of controlling handover of a user equipment in a wireless communication system, the method comprising:
monitoring (302) a first signal measurement value, associated with a reference signal transmitted by a serving eNB and on second signal measurement value, associated with a reference signal transmitted by a further eNB;
initiating (308) a time to trigger, TTT, timer based on a determination (304) that the first signal measurement value is less than the second signal measurement value; responsive to a determination (314) that the first signal measurement value is less than the second signal measurement value by more than a threshold value, terminating the TTT timer;
transmitting a measurement report to the serving eNB upon termination of the TTT timer; and
receiving a handover command from the serving eNB in response to the measurement report.

6. The method of claim 5, wherein the first signal measurement value and the second signal measurement value comprise one of reference signal received power values;
a reference signal received quality or a signal to noise ratio.

7. The method of claim 5 further comprising receiving information comprising the threshold value from the serving eNB; and optionally
wherein receiving information comprising the threshold value from the serving eNB comprises receiving on ReportConfigEUTRA information element from the eNB.

8. An eNB for use in a wireless communication system, the eNB comprising:
a communication module configured to transmit a wireless signal to at least one user equipment; and
control logic coupled to the communication module and configured to:
obtain an offset-threshold value to be used by a user equipment in determining whether to terminate a time to trigger, TTT, timer early;
cause the communication module to transmit information to at least one user equipment, the information comprising the offset-threshold value;
receive a measurement report from the at least one user equipment upon termination of the TTT timer; and
transmit a handover command to the user equipment in response to the measurement report.

9. The eNB of claim 8, wherein the communication module is further configured to transmit a reference signal to the at least one user equipment.

10. The eNB of claim 9, wherein the information comprising the threshold value comprises a ReportConfigEUTRA information element.

11. A method performed in eNB in a wireless communication system, the method comprising:
obtaining an offset-threshold value to be used by a user equipment in determining whether to terminate a time to trigger, TTT, timer early;
transmitting information to at least one user equipment, the information comprising the offset-threshold value;
receiving a measurement report from the user equipment upon termination of the TTT timer; and
transmitting a handover command to the user equipment in response to the measurement report.

12. The method of claim 11, wherein the information comprising the threshold value comprises a ReportConfigEUTRA information element.

13. A non-transient computer readable medium comprising computer program instructions that when executed on a processor cause the method of any of claims 5 to 7, or claims 11 or 12 to be performed.

## Patentansprüche

1. Benutzervorrichtung zur Verwendung in einem drahtlosen Kommunikationssystem, wobei die Benutzervorrichtung umfasst:
ein Kommunikationsmodul, das konfiguriert ist, um einen ersten Signalmesswert, der einem von einem dienenden eNB gesendeten Referenzsignal zugeordnet ist, und einen zweiten Signalmesswert, der einem von einem weiteren eNB gesendeten Referenzsignal zugeordnet ist, zu erhalten; und
Steuerlogik, die konfiguriert ist zum:
Initiieren (308) eines Time-To-Trigger, TTT, Timers basierend auf einer Bestimmung (304), dass der erste Signalmesswert kleiner als der zweite Signalmesswert ist;
nach Beendigung des TTT-Timers nach dem den ersten Signalmesswert mehr als einen Schwellenwert kleiner als der zweite Signalmesswert ist; und
Veranlassen, dass die Steuerlogik einen Messbericht an den dienenden eNB sendet nach Beendigung des TTT-Timers, und
wobei das Kommunikationsmodul ferner konfiguriert ist, um als Antwort auf den Messbericht einen Übergabebefehl von dem dienenden eNB zu empfangen.

2. Benutzervorrichtung nach Anspruch 1, wobei das Kommunikationsmodul ferner konfiguriert ist, um Informationen, die den Schwellenwert umfassen, von dem dienenden eNB zu empfangen; optional
wobei das Kommunikationsmodul ferner konfiguriert ist, um den Schwellenwert von dem dienenden eNB in einem ReportConfigEUTRA-Informationselement zu empfangen.

3. Benutzervorrichtung nach Anspruch 1, wobei der erste Signalmesswert und der zweite Signalmesswert umfassen einem von:
Referenzsignal-Empfangsleistung, RSRP, Werte;
Referenzsignal-Empfangsqualität, RSRQ, Werte; und
Signal-zu-Interferenz-Rausch-Verhältnis, SINR, Werte.

4. Benutzervorrichtung nach Anspruch 1, wobei die Benutzervorrichtung für die Verwendung in einem Netzwerk, das die langfristige Entwicklung des Long Term Evolution, LTE, Advanced Wireless Communication Standard des 3rd Generation Partnership Project implementiert, bestimmt ist; oder
wobei das drahtlose Kommunikationssystem eine heterogene Netzwerkumgebung umfasst.

5. Verfahren zum Steuern des Weiterreichens einer Benutzervorrichtung in einem drahtlosen Kommunikationssystem, wobei das Verfahren umfasst:
Überwachen (302) eines ersten Signalmesswerts, der einem von einem dienenden eNB gesendeten Referenzsignal zugeordnet ist, und eines zweiten Signalmesswerts, der einem von einem weiteren eNB gesendeten Referenzsignal zugeordnet ist;
Initiieren (308) eines Time-To-Trigger, TTT, Timers basierend auf einer Bestimmung (304), dass der erste Signalmesswert kleiner als der zweite Signalmesswert ist; in Antwort auf eine Bestimmung (314), dass der erste Signalmesswert um mehr als einen Schwellenwert kleiner als dem zweiten Signalmesswert ist, Beendigen des TTT-Timers;
Senden eines Messberichts an den dienenden eNB bei Beendigung des TTT-Timers; und
Empfangen eines Übergabebefehls von dem dienenden eNB als Antwort auf den Messbericht.

6. Verfahren nach Anspruch 5, wobei der erste Signalmesswert und der zweite Signalmesswert einen von Referenzsignal-Empfangsleistungswerten; eine Referenzsignal-Empfangsqualität oder ein Signal-Rausch-Verhältnis umfassen.

7. Verfahren nach Anspruch 5 ferner umfassend Empfangen von Informationen, die den Schwellenwert von dem dienenden eNB umfassen; und optional
wobei das Empfangen von Informationen, die den Schwellenwert von dem dienenden eNB umfassen, ein Empfangen von Informationselementen auf ReportConfigEUTRA von dem eNB umfasst.

8. eNB zur Verwendung in einem drahtlosen Kommunikationssystem, wobei der eNB umfasst:
ein Kommunikationsmodul, das konfiguriert ist, um ein drahtloses Signal an zumindest eine Benutzervorrichtung zu senden; und
Steuerlogik, die mit dem Kommunikationsmodul gekoppelt und konfiguriert ist zum:
Erhalten eines Offset-Schwellenwertes, der von einer Benutzervorrichtung verwendet wird, um zu bestimmen, ob einen Time-To-Trigger, TTT, Timer vorzeitig beendet werden soll;
Veranlassen, dass das Kommunikationsmodul Informationen an zumindest eine Benutzervorrichtung sendet, wobei die Informationen den Offset-Schwellenwert umfassen;
Empfangen eines Messberichts von der zumindest einen Benutzervorrichtung bei Beendigung des TTT-Timers; und
Senden eines Übergabe-Befehls an die Benutzervorrichtung als Antwort auf den Messbericht.

9. eNB nach Anspruch 8, wobei das Kommunikationsmodul ferner konfiguriert ist, um ein Referenzsignal an die zumindest eine Benutzervorrichtung zu senden.

10. eNB nach Anspruch 9, wobei die Informationen, die den Schwellenwert umfassen, ein ReportConfigEUTRA-Informationselement umfassen.

11. Verfahren, das in einem eNB in einem drahtlosen Kommunikationssystem durchgeführt wird, wobei das Verfahren umfasst:
Erhalten eines Offset-Schwellenwertes, der von einer Benutzervorrichtung bei der Bestimmung, ob einen Time-To-Trigger, TTT, Timer vorzeitig beendet werden soll, verwendet werden soll;
Senden von Informationen an zumindest eine Benutzervorrichtung, wobei die Informationen den Offset-Schwellenwert umfassen;
Empfangen eines Messberichts von der Benutzervorrichtung bei Beendigung des TTT-Timers; und
Senden eines Übergabebefehls an die Benutzervorrichtung in Antwort auf den Messbericht.

12. Verfahren nach Anspruch 11, wobei die Informationen, die den Schwellenwert umfassen, ein ReportConfigEUTRA-Informationselement umfassen.

13. Nichtflüchtiges computerlesbares Medium umfassend Computerprogrammanweisungen, die, wenn sie auf einem Prozessor ausgeführt werden, die Durchführung des Verfahrens nach einem der Ansprüche 5 bis 7 oder 11 oder 12 verursachen.

## Revendications

1. Un équipement utilisateur destiné à être utilisé dans un système de communication sans fil, l'équipement utilisateur comprenant :
un module de communication configuré pour obtenir une première valeur de mesure de signal, associée à un signal de référence transmis par un eNB de desserte, et une seconde valeur de mesure de signal, associée à un signal de référence transmis par un autre eNB ; et
une logique de contrôle configurée pour :
lancer (308) un temporisateur de temps de déclenchement, TTT, sur la base d'une détermination (304) que la première valeur de mesure de signal est inférieure à la seconde valeur de mesure de signal ;
suite à l'expiration du temporisateur de TTT lorsque la première valeur de mesure de signal est inférieure à la seconde valeur de mesure de signal de plus qu'une valeur de seuil, amener la logique de contrôle à transmettre un rapport de mesure à l'eNB de desserte lors de l'arrêt du temporisateur de TTT, et
dans lequel le module de communication est en outre configuré pour recevoir une commande de handover en provenance de l'eNB de desserte en réponse au rapport de mesure.

2. L'équipement utilisateur selon la revendication 1, dans lequel le module de communication est en outre configuré pour recevoir en provenance de l'eNB de desserte une information comprenant la valeur de seuil ; et éventuellement
dans lequel le module de communication est en outre configuré pour recevoir la valeur de seuil en provenance de l'eNB de desserte dans un élément d'information ReportConfigEUTRA.

3. L'équipement utilisateur selon la revendication 1, dans lequel la première valeur de mesure de signal et la seconde valeur de mesure de signal comprennent :
des valeurs de puissance reçue de signal de référence, RSRP ; ou
des valeurs de qualité reçue de signal de référence, RSRQ ; ou
des valeurs de rapport signal sur interférence plus bruit, SINR.

4. L'équipement utilisateur selon la revendication 1, dans lequel l'équipement utilisateur est destiné à être utilisé dans un réseau mettant en application la norme de communication sans fil avancée Évolution à long terme, LTE, de 3rd Generation Partnership Project ; ou
dans lequel le système de communication sans fil comprend un environnement de réseau hétérogène.

5. Un procédé de commande de handover d'un équipement utilisateur dans un système de communication sans fil, le procédé comprenant :
la surveillance (302) d'une première valeur de mesure de signal, associée à un signal de référence transmis par un eNB de desserte, et d'une seconde valeur de mesure de signal, associée à un signal de référence transmis par un autre eNB ;
le lancement (308) d'un temporisateur de temps de déclenchement, TTT, sur la base d'une détermination (304) que la première valeur de mesure de signal est inférieure à la seconde valeur de mesure de signal ;
en réponse à une détermination (314) que la première valeur de mesure de signal est inférieure à la seconde valeur de mesure de signal de plus qu'une valeur de seuil, l'arrêt du temporisateur de TTT ;
la transmission d'un rapport de mesure à l'eNB de desserte lors de l'arrêt du temporisateur de TTT ; et
la réception d'une commande de handover en provenance de l'eNB de desserte en réponse au rapport de mesure.

6. Le procédé selon la revendication 5, dans lequel la première valeur de mesure de signal et la seconde valeur de mesure de signal comprennent des valeurs de puissance reçue de signal de référence ; ou
une qualité reçue de signal de référence ou un rapport signal sur bruit.

7. Le procédé selon la revendication 5 comprenant en outre la réception d'une information comprenant la valeur de seuil en provenance de l'eNB de desserte ; et éventuellement
dans lequel la réception d'une information comprenant la valeur de seuil en provenance de l'eNB de desserte comprend la réception dans un élément d'information ReportConfigEUTRA en provenance de l'eNB.

8. Un eNB destiné à être utilisé dans un système de communication sans fil, l'eNB comprenant :
un module de communication configuré pour transmettre un signal sans fil à au moins un équipement utilisateur ; et
une logique de contrôle couplée au module de communication et configurée pour :
obtenir une valeur de seuil de compensation devant être utilisée par un équipement utilisateur pour déterminer s'il faut arrêter un temporisateur de temps de déclenchement, TTT, en avance ;
amener le module de communication à transmettre une information à au moins un équipement utilisateur, l'information comprenant la valeur de seuil de compensation ;
recevoir un rapport de mesure en provenance de l'au moins un équipement utilisateur lors de l'arrêt du temporisateur de TTT ; et
transmettre une commande de handover à l'équipement utilisateur en réponse au rapport de mesure.

9. L'eNB selon la revendication 8, dans lequel le module de communication est en outre configuré pour transmettre un signal de référence à l'au moins un équipement utilisateur.

10. L'eNB selon la revendication 9, dans lequel l'information comprenant la valeur de seuil comprend un élément d'information ReportConfigEUTRA.

11. Un procédé mis en œuvre dans un eNB dans un système de communication sans fil, le procédé comprenant :
l'obtention d'une valeur de seuil de compensation devant être utilisée par un équipement utilisateur pour déterminer s'il faut arrêter un temporisateur de temps de déclenchement, TTT, en avance ;
la transmission d'une information à au moins un équipement utilisateur, l'information comprenant la valeur de seuil de compensation ;
la réception d'un rapport de mesure en provenance de l'équipement utilisateur lors de l'arrêt du temporisateur de TTT ; et
la transmission d'une commande de handover à l'équipement utilisateur en réponse au rapport de mesure.

12. Le procédé selon la revendication 11, dans lequel l'information comprenant la valeur de seuil comprend un élément d'information ReportConfigEUTRA.

13. Un support non transitoire lisible par ordinateur comprenant des instructions de programme d'ordinateur qui, lorsqu'elles sont exécutées sur un processeur, amènent à mettre en œuvre le procédé selon l'une des revendications 5 à 7 ou des revendications 11 ou 12.
